# EUROPEAN PATENT APPLICATION

(11) **EP 2 381 104 A2**
(43) Date of publication of application: **26.10.2011**
(21) Application number: 11162299.9
(22) Date of filing: 13.04.2011
(51) Int. Cl.: F03D 11/04, F03D 1/00

(54) **Wind turbine, nacelle and method of assembling wind turbine**

(30) Priority: 20.04.2010 US 763829
(71) Applicant: General Electric Company, Schenectady, NY 12345 (US)
(72) Inventor: Middendorf, Joerg, 48499, Salzbergen (DE)
(74) Representative: Bedford, Grant Richard

(57) **Abstract**

A nacelle (106) for a wind turbine (100) is provided. The nacelle includes a shell (200) having an exterior surface (204) and an interior surface (206), the interior surface defining an inner cavity (202), and at least one insulative covering (302) adjacent to the exterior surface, the insulative covering configured to reduce a fluctuation of a temperature within the inner cavity.

## Description

The subject matter described herein relates generally to wind turbines and, more particularly, to a wind turbine, a nacelle, and a method of assembling a wind turbine.

Generally, a wind turbine includes a rotor that includes a rotatable hub assembly having multiple blades. The blades transform wind energy into a mechanical rotational torque that drives one or more generators via the rotor. The generators are sometimes, but not always, rotationally coupled to the rotor through a gearbox. The gearbox steps up the inherently low rotational speed of the rotor for the generator to efficiently convert the rotational mechanical energy to electrical energy, which is fed into a utility grid via at least one electrical connection. Gearless direct drive wind turbines also exist. The rotor, generator, gearbox and other components are typically mounted within a housing, or nacelle, that is positioned on a base that includes a truss or tubular tower.

In at least some known wind turbines, components such as the generator and gearbox generate heat within the nacelle. During times of high solar radiation, such as during summer months, and/or in hot climates, such heat generation may cause an undesirable accumulation of heat within the nacelle. Such heat accumulation may be damaging to one or more components of the wind turbine. In at least some known wind turbines, one or more electric fans are used to remove heat from the nacelle. However, use of such fans consumes energy and reduces a total amount of energy that a wind turbine may produce.

Moreover, in cold climates and/or during winter months, a temperature within the nacelle may fall below a desired level for safe and/or optimal wind turbine operation. In such situations, one or more heaters may be used to heat one or more components, such as oil within a gearbox. However, use of such heaters also consumes energy and reduces a total amount of energy that a wind turbine may produce.

In one aspect according to the present invention, a nacelle for a wind turbine is provided that includes a shell having an exterior surface and an interior surface that defines an inner cavity. The nacelle includes an insulative covering that is positioned adjacent to the exterior surface. The insulative covering is configured to reduce a fluctuation of a temperature within the inner cavity.

In another aspect, a wind turbine is provided that includes a tower and a nacelle coupled to the tower. The nacelle includes a shell having an exterior surface and an interior surface that defines an inner cavity. The nacelle also includes an insulative covering that is positioned adjacent to the exterior surface, and the insulative covering is configured to reduce a fluctuation of a temperature within the inner cavity.

In yet another aspect, a method of assembling a wind turbine is provided that includes coupling a nacelle to a tower. The nacelle includes a shell having an exterior surface and an interior surface, and the interior surface defines an inner cavity. An insulative covering is positioned adjacent to the exterior surface of the shell. The insulative covering is configured to reduce a fluctuation of a temperature within the inner cavity.

Various aspects and embodiments of the present invention will now be described in connection with the accompanying drawings, in which:
Fig. 1 is a schematic view of an exemplary wind turbine.
Fig. 2 is a partial sectional view of an exemplary nacelle suitable for use with the wind turbine shown in Fig. 1.
Fig. 3 is a sectional schematic view of the nacelle shown in Fig. 2.
Fig. 4 is a sectional schematic view of an alternative nacelle suitable for use with the wind turbine shown in Fig. 1.
Fig. 5 is a flow diagram of an exemplary method of assembling a wind turbine suitable for use with the wind turbine shown in Fig. 1.

The embodiments described herein provide one or more insulative coverings for a wind turbine. The insulative covering is adjacent to one or more surfaces of a nacelle or to any other suitable surface of the wind turbine. The insulative covering enables the wind turbine to reflect solar radiation when an ambient temperature is above a temperature threshold, and to absorb solar radiation when the ambient temperature is below the temperature threshold. Moreover, as the ambient temperature increases above the temperature threshold, the insulative covering reflects an increasing amount of solar radiation. Similarly, as the ambient temperature decreases below the temperature threshold, the insulative covering absorbs an increasing amount of solar radiation. As such, the insulative covering reduces a fluctuation of a temperature within the nacelle. In one embodiment, the insulative covering includes a reflective coating that is adjacent to the nacelle. In another embodiment, the insulative covering includes a coating that changes colors, reflectiveness, and/or transparency based on an ambient temperature. In yet another embodiment, two insulative coverings are adjacent to the nacelle. An inner covering is substantially reflective to reflect solar radiation that passes through an outer covering. The outer covering is substantially transparent at temperatures above a temperature threshold and substantially opaque at temperatures below a temperature threshold. As such, the one or more insulative coverings reduce an amount of energy required to heat and/or cool the nacelle.

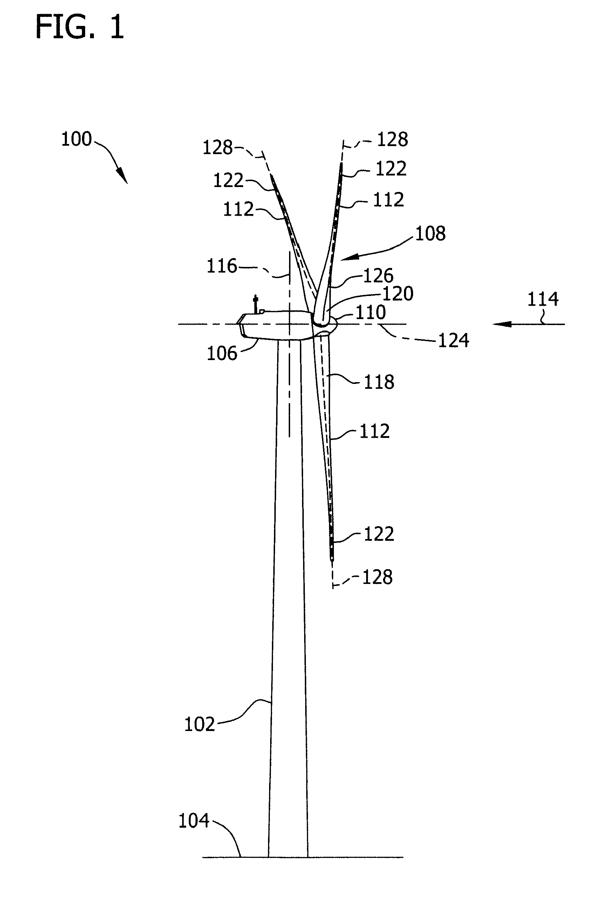

Fig. 1 is a schematic view of an exemplary wind turbine 100. In the exemplary embodiment, wind turbine 100 is a horizontal-axis wind turbine. Alternatively, wind turbine 100 may be a vertical-axis wind turbine. In the exemplary embodiment, wind turbine 100 includes a tower 102 extending from and coupled to a supporting surface 104. Tower 102 may be coupled to surface 104 with anchor bolts or via a foundation mounting piece (neither shown), for example. A nacelle 106 is coupled to tower 102, and a rotor 108 is coupled to nacelle 106. Rotor 108 includes a rotatable hub 110 and a plurality of rotor blades 112 coupled to hub 110. In the exemplary embodiment, rotor 108 includes three rotor blades 112. Alternatively, rotor 108 may have any suitable number of rotor blades 112 that enables wind turbine 100 to function as described herein. Tower 102 may have any suitable height and/or construction that enables wind turbine 100 to function as described herein.

Rotor blades 112 are spaced about hub 110 to facilitate rotating rotor 108, thereby transferring kinetic energy from wind 114 into usable mechanical energy, and subsequently, electrical energy. Rotor 108 and nacelle 106 are rotated about tower 102 on a yaw axis 116 to control a perspective of rotor blades 112 with respect to the direction of wind 114. Rotor blades 112 are mated to hub 110 by coupling a blade root portion 118 to hub 110 at a plurality of load transfer regions 120. Load transfer regions 120 each have a hub load transfer region and a blade load transfer region (both not shown in Fig. 1). Loads induced to rotor blades 112 are transferred to hub 110 via load transfer regions 120. Each rotor blade 112 also includes a blade tip portion 122.

In the exemplary embodiment, rotor blades 112 have a length of between approximately 30 meters (m) (99 feet (ft)) and approximately 120 m (394 ft). Alternatively, rotor blades 112 may have any suitable length that enables wind turbine 100 to function as described herein. For example, rotor blades 112 may have a suitable length less than 30 m or greater than 120 m. As wind 114 contacts rotor blade 112, blade lift forces are induced to rotor blade 112 and rotation of rotor 108 about an axis of rotation 124 is induced as blade tip portion 122 is accelerated.

A pitch angle (not shown) of rotor blades 112, i.e., an angle that determines the perspective of rotor blade 112 with respect to the direction of wind 114, may be changed by a pitch assembly (not shown in Fig. 1). Specifically, increasing a pitch angle of rotor blade 112 decreases an amount of blade surface area 126 exposed to wind 114 and, conversely, decreasing a pitch angle of rotor blade 112 increases an amount of blade surface area 126 exposed to wind 114. The pitch angles of rotor blades 112 are adjusted about a pitch axis 128 at each rotor blade 112. In the exemplary embodiment, the pitch angles of rotor blades 112 are controlled individually. Alternatively, the pitch angles of rotor blades 112 are controlled as a group.

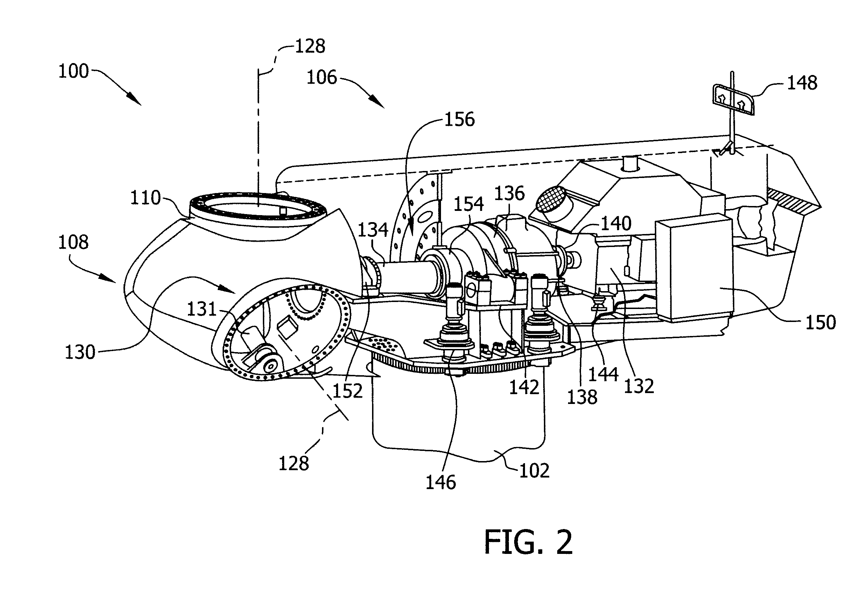

Fig. 2 is a partial sectional view of nacelle 106 of exemplary wind turbine 100 (shown in Fig. 1). Various components of wind turbine 100 are housed in nacelle 106. In the exemplary embodiment, nacelle 106 includes three pitch assemblies 130. Each pitch assembly 130 is coupled to an associated rotor blade 112 (shown in Fig. 1), and modulates a pitch of associated rotor blade 112 about pitch axis 128. Only one of three pitch assemblies 130 is shown in Fig. 2. In the exemplary embodiment, each pitch assembly 130 includes at least one pitch drive motor 131.

As shown in Fig. 2, rotor 108 is rotatably coupled to an electric generator 132 positioned within nacelle 106 via rotor shaft 134 (sometimes referred to as either a main shaft or a low speed shaft), a gearbox 136, a high speed shaft 138, and a coupling 140. Rotation of rotor shaft 134 rotatably drives gearbox 136 that subsequently drives high speed shaft 138. High speed shaft 138 rotatably drives generator 132 via coupling 140 and rotation of high speed shaft 138 facilitates production of electrical power by generator 132. Gearbox 136 is supported by support 142 and generator 132 is supported by support 144. In the exemplary embodiment, gearbox 136 utilizes a dual path geometry to drive high speed shaft 138. Alternatively, rotor shaft 134 is coupled directly to generator 132 via coupling 140.

Nacelle 106 also includes a yaw drive mechanism 146 that rotates nacelle 106 and rotor 108 about yaw axis 116 (shown in Fig. 1) to control the perspective of rotor blades 112 with respect to the direction of wind 114. Nacelle 106 also includes at least one meteorological mast 148 that includes a wind vane and anemometer (neither shown in Fig. 2). In one embodiment, meteorological mast 148 provides information, including wind direction and/or wind speed, to a control system 150. Control system 150 includes one or more controllers or other processors configured to execute control algorithms. As used herein, the term "processor" includes any programmable system including systems and microcontrollers, reduced instruction set circuits (RISC), application specific integrated circuits (ASIC), programmable logic circuits (PLC), and any other circuit capable of executing the functions described herein. The above examples are exemplary only, and thus are not intended to limit in any way the definition and/or meaning of the term processor. Moreover, control system 150 may execute a SCADA (Supervisory, Control and Data Acquisition) program.

Pitch assembly 130 is operatively coupled to control system 150. In the exemplary embodiment, nacelle 106 also includes a main or forward support bearing 152 and an aft support bearing 154. Forward support bearing 152 and aft support bearing 154 facilitate radial support and alignment of rotor shaft 134. Forward support bearing 152 is coupled to rotor shaft 134 near hub 110. Aft support bearing 154 is positioned on rotor shaft 134 near gearbox 136 and/or generator 132. Alternatively, nacelle 106 includes any number of support bearings that enable wind turbine 100 to function as disclosed herein. Rotor shaft 134, generator 132, gearbox 136, high speed shaft 138, coupling 140, and any associated fastening, support, and/or securing device including, but not limited to, support 142, support 144, forward support bearing 152, and aft support bearing 154, are sometimes referred to as a drive train 145.

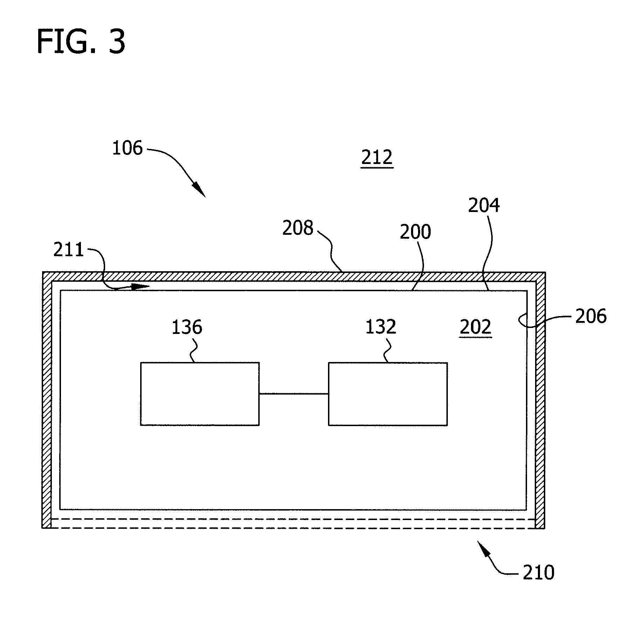

Fig. 3 is a sectional schematic view of nacelle 106. While Fig. 3 only illustrates gearbox 136 and generator 132 positioned within nacelle 106, this is for clarity only. As shown in Fig. 2, for example, any suitable component may be housed and/or positioned within nacelle 106. In the exemplary embodiment, nacelle 106 includes an outer shell 200 that defines an inner cavity 202. More specifically, outer shell 200 includes an exterior surface 204 and an interior surface 206 that defines inner cavity 202. Gearbox 136, generator 132, and/or any suitable component of wind turbine 100 (shown in Fig. 1) is positioned within inner cavity 202.

At least one insulative covering 208 is disposed upon and/or positioned adjacent to or about at least a portion of exterior surface 204 of outer shell 200. Insulative covering 208 is configured to insulate inner cavity 202 and/or reduce a temperature fluctuation within inner cavity 202. In the exemplary embodiment, insulative covering 208 is disposed upon and/or positioned adjacent to or about substantially all portions of exterior surface 204 except a bottom portion 210. Moreover, insulative covering 208 substantially covers, coats, and/or encloses exterior surface 204. Alternatively, insulative covering 208 is disposed upon and/or positioned adjacent to or about substantially all portions of exterior surface 204 including bottom portion 210. As used herein, the terms "insulate" and "insulative" refer to providing or configuring a material or component to prevent or reduce a transfer of heat.

In one embodiment, insulative covering 208 is positioned adjacent to exterior surface 204 such that a gap 211 is defined between insulative covering 208 and exterior surface 204. In such an embodiment, gap 211 is a vacuum such that air and other gases or materials are substantially absent from gap 211. Alternatively, gap 211 may be filled with air or other gases, with an insulative material, and/or with any suitable material or composition. As such, gap 211 provides additional insulation to insulative covering 208 and/or to nacelle 106.

In the exemplary embodiment, insulative covering 208 includes one or more reflective films or coatings, ceramic layers, paints and/or lacquers. For example, insulative covering 208 may include a heat reflecting film such as an aluminum foil, or any suitable material or composition. Insulative covering 208 reflects at least a portion of solar radiation that impacts exterior surface 204 and/or insulative covering 208. As such, insulative covering 208 reduces an amount of solar radiation and/or heat absorbed by nacelle 106, thus reducing a temperature and/or a fluctuation of the temperature inside inner cavity 202. Alternatively, insulative covering 208 may include a shield or another suitable structure coupled to nacelle 106 that reflects solar radiation and/or provides shade to nacelle 106.

In an alternative embodiment, insulative covering 208 includes at least one thermochromic and/or any other suitable coating that changes color and/or reflectiveness based on an ambient temperature of an external environment 212 proximate to nacelle 106 and/or an ambient temperature within inner cavity 202. For example, insulative covering 208 may include, without limitation, one or more thermochromic crystals embodied within a substrate or other medium, one or more thermochromic dyes or capsules, such as a leuco dye, embodied within a medium, and/or any suitable thermochromic material. In a particular embodiment, the coating has a predetermined color at a predetermined temperature threshold or value. The coating becomes lighter in color if the ambient temperature increases above the temperature threshold, and the coating becomes darker in color if the ambient temperature decreases below the temperature threshold. As the color becomes lighter due to a higher ambient temperature, more solar radiation is reflected from outer shell 200, and nacelle 106 absorbs less heat from the solar radiation. As such, as the ambient temperature increases, insulative covering 208 exhibits an increased resistance to heat absorption from solar radiation. Conversely, as the color becomes darker due to a lower ambient temperature, less solar radiation is reflected by outer shell 200, and nacelle 106 absorbs more heat from the solar radiation. As such, as the ambient temperature decreases, insulative covering 208 exhibits an increased resistance to heat loss due to the increased absorption of solar radiation. In other words, insulative covering 208 increases a resistance to temperature fluctuations within inner cavity 202 as an ambient temperature progressively increases above and/or decreases below a temperature threshold.

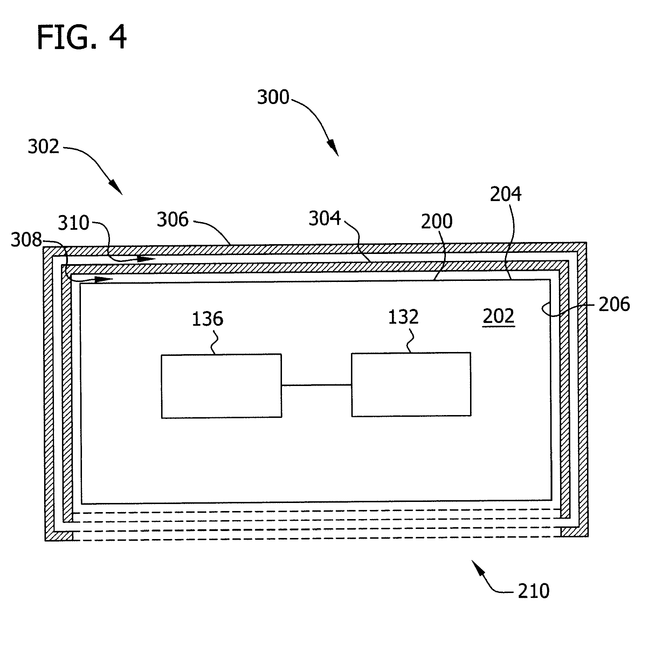

Fig. 4 illustrates a sectional schematic view of an alternative nacelle 300 suitable for use with wind turbine 100 (shown in Fig. 1). Except as described herein, nacelle 300 is substantially similar to nacelle 106 (shown in Fig. 3), and similar components are labeled with the same reference numerals. In a particular embodiment, at least two insulative coverings 302, such as a first or inner covering 304 and a second or outer covering 306, are disposed upon and/or positioned adjacent to or about exterior surface 204 of outer shell 200. Inner covering 304 is disposed upon and/or positioned adjacent to or about exterior surface 204 to substantially cover, coat, and/or enclose exterior surface 204. In one embodiment, inner covering 304 covers, coats, and/or encloses substantially all of exterior surface 204 except bottom portion 210, and outer covering 306 is disposed upon and/or positioned adjacent to or about inner covering 304 to substantially cover, coat, and/or enclose inner covering 304.

In one embodiment, inner covering 304 is positioned adjacent to exterior surface 204 such that an inner gap 308 is defined between inner covering 304 and exterior surface 204. Additionally or alternatively, outer covering 306 is positioned adjacent to inner covering 304 such that an outer gap 310 is defined between outer covering 306 and inner covering 304. In such an embodiment, inner gap 308 and outer gap 310 are vacuums such that air and other gases or materials are substantially absent from inner gap 308 and outer gap 310. Alternatively, inner gap 308 and/or outer gap 310 may be filled with air or other gases, with an insulative material, and/or with any suitable material or composition. As such, inner gap 308 and outer gap 310 provide additional insulation to inner covering 304, to outer covering 306, and/or to nacelle 106.

In the exemplary embodiment, inner covering 304 is reflective, and may include a metallic foil, a reflective paint or lacquer, a ceramic layer, and/or another suitable reflective material or composition. Outer covering 306 includes a suitable material or composition, such as a thermotropic coating, a thermochromic semiconductor coating, and/or any suitable material or coating that changes transparency based on an ambient temperature of external environment 212 and/or an ambient temperature within inner cavity 202. For example, outer covering 306 may include, without limitation, one or more thermotropic crystals embodied within a substrate or other medium, a vanadium dioxide-based coating, and/or any suitable coating.

In the exemplary embodiment, outer covering 306 has a predetermined transparency at a predetermined temperature threshold or value. Outer covering 306 becomes more transparent if the ambient temperature increases above the temperature threshold, and outer covering 306 becomes less transparent (i.e., more opaque) if the ambient temperature decreases below the temperature threshold. As outer covering 306 becomes more transparent due to a higher ambient temperature, more solar radiation is passed through outer covering 306 and is reflected away from nacelle 300 by inner covering 304 such that nacelle 300 absorbs less heat from the solar radiation. As such, as the ambient temperature increases, inner covering 304 and outer covering 306 exhibit an increased resistance to heat absorption from solar radiation. Conversely, as outer covering 306 becomes more opaque due to a lower ambient temperature, less solar radiation is passed through outer covering 306 and reflected by inner covering 304. Rather, more solar radiation is absorbed by outer covering 306, and nacelle 300 absorbs more heat from the solar radiation. As such, as the ambient temperature decreases, inner covering 304 and outer covering 306 exhibit an increased resistance to heat loss due to the increased absorption of solar radiation. In other words, inner covering 304 and outer covering 306 increase a resistance to temperature fluctuations within inner cavity 202 as an ambient temperature progressively increases above and/or decreases below a temperature threshold.

While Figs. 3 and 4 illustrate insulative covering 208, inner covering 304, and/or outer covering 306 disposed upon and/or positioned adjacent to or about exterior surface 204 of nacelle 106 and/or nacelle 300, insulative covering 208, inner covering 304, and/or outer covering 306 may be disposed upon and/or positioned adjacent to or about any suitable surface of wind turbine 100. For example, insulative covering 208, inner covering 304, and/or outer covering 306 may be disposed upon and/or positioned adjacent to or about, without limitation, one or more suitable surfaces of tower 102, rotor 108, hub 110, and/or rotor blades 112. Moreover, existing wind turbines may be retrofitted to include insulative covering 208, inner covering 304, and/or outer covering 306 to reduce temperature fluctuations as described herein.

In the exemplary embodiment, insulative covering 208, inner covering 304, and/or outer covering 306 are embodied within one or more lacquers, paints, varnishes, and/or any other suitable coating. The coating is applied to exterior surface 204 by spraying, painting, and/or by any suitable application. In one embodiment, insulative covering 208, inner covering 304, and/or outer covering 306 are embodied in a laminate, a layer of metal or alloy, a substrate, and/or any other suitable material that is adhesively coupled, sprayed, painted, and/or disposed upon and/or positioned adjacent to or about nacelle 106 and/or nacelle 300 by any other suitable method.

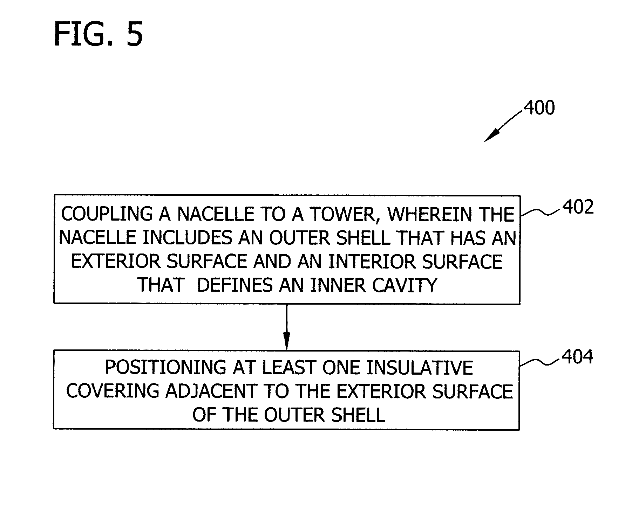

Fig. 5 illustrates a method 400 of assembling a wind turbine, such as wind turbine 100 (shown in Fig. 1). In the exemplary embodiment, a nacelle is coupled 402 to a tower. The nacelle includes an outer shell that has an exterior surface and an interior surface that defines an inner cavity. At least one insulative covering is disposed upon or positioned 404 adjacent to or about the exterior surface of the outer shell. The at least one insulative covering is configured to reduce a temperature fluctuation within the inner cavity as described herein.

In one embodiment, the insulative covering includes a reflective coating that is disposed upon and/or positioned 404 adjacent to or about the exterior surface of the outer shell. Additionally or alternatively, the insulative covering includes a coating that is disposed upon and/or positioned 404 adjacent to or about the exterior surface, and the coating is configured to change colors based on an ambient temperature. In yet another embodiment, the insulative covering includes an inner covering that is disposed upon and/or positioned 404 adjacent to or about an exterior surface of the outer shell, and an outer covering that is disposed upon and/or positioned 404 adjacent to or about the inner covering. In a particular embodiment, a reflective inner covering is disposed upon and/or positioned 404 adjacent to or about an exterior surface of the outer shell. An outer covering is disposed upon and/or positioned 404 adjacent to or about the inner covering. The outer covering is substantially transparent when an ambient temperature is above a temperature threshold and is substantially opaque when the ambient temperature is below the temperature threshold.

The embodiments described herein provide a cost-effective and efficient insulative covering for controlling temperatures within a wind turbine. The insulative covering is disposed upon and/or positioned adjacent to or about one or more surfaces of a nacelle or to any other suitable surface of the wind turbine. The insulative covering enables the wind turbine to substantially reflect solar radiation when an ambient temperature is above a temperature threshold, and to substantially absorb solar radiation when the ambient temperature is below the temperature threshold. Moreover, as the ambient temperature increases above the temperature threshold, the insulative covering reflects an increasing amount of solar radiation. Similarly, as the ambient temperature decreases below the temperature threshold, the insulative covering absorbs an increasing amount of solar radiation. As such, the insulative covering reduces a temperature fluctuation within the nacelle. Moreover, as described herein, the insulative covering reduces an amount of energy required to heat and/or cool the nacelle.

Exemplary embodiments of a wind turbine, a nacelle, and a method of assembling a wind turbine are described above in detail. The wind turbine, nacelle, and method are not limited to the specific embodiments described herein, but rather, components of the wind turbine and/or the nacelle and/or steps of the method may be utilized independently and separately from other components and/or steps described herein. For example, the nacelle and method may also be used in combination with other power systems and methods, and are not limited to practice with only the wind turbine system as described herein. Rather, the exemplary embodiment can be implemented and utilized in connection with many other wind turbine or power system applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A nacelle for a wind turbine, said nacelle comprising:
   a shell having an exterior surface and an interior surface, said interior surface defining an inner cavity; and,
   at least one insulative covering adjacent to said exterior surface, said insulative covering configured to reduce a fluctuation of a temperature within said inner cavity.
2. A nacelle in accordance with clause 1, wherein said insulative covering comprises a reflective coating.
3. A nacelle in accordance with any preceding clause, wherein said insulative covering comprises a coating configured to change colors based on an ambient temperature.
4. A nacelle in accordance with any preceding clause, wherein said insulative covering comprises a plurality of insulative coverings.
5. A nacelle in accordance with any preceding clause, wherein said plurality of insulative coverings comprises a first covering adjacent to said exterior surface and a second covering adjacent to said first covering.
6. A nacelle in accordance with any preceding clause, wherein said first covering comprises a reflective coating and said second covering comprises a coating that is configured to be substantially transparent when an ambient temperature is above a temperature threshold and to be substantially opaque when the ambient temperature is below the temperature threshold.
7. A nacelle in accordance with any preceding clause, wherein said second covering comprises at least one layer of at least one of a thermotropic material and a thermochromic material.
8. A wind turbine, comprising:
   a tower; and,
   a nacelle coupled to said tower, said nacelle comprising:
      a shell having an exterior surface and an interior surface, said interior surface defining an inner cavity; and,
      at least one insulative covering adjacent to said exterior surface, said insulative covering configured to reduce a fluctuation of a temperature within said inner cavity.
9. A wind turbine in accordance with any preceding clause, wherein said insulative covering comprises a reflective coating.
10. A wind turbine in accordance with any preceding clause, wherein said at least one insulative covering comprises a coating configured to change colors based on an ambient temperature.
11. A wind turbine in accordance with any preceding clause, wherein said coating becomes lighter in color if an ambient temperature increases above a temperature threshold, and said coating becomes darker in color if the ambient temperature decreases below the temperature threshold.
12. A wind turbine in accordance with any preceding clause, wherein said insulative covering comprises a plurality of insulative coverings.
13. A wind turbine in accordance with any preceding clause, wherein said plurality of insulative coverings comprises a first covering adjacent to said exterior surface and a second covering adjacent to said first covering.
14. A wind turbine in accordance with any preceding clause, wherein said first covering comprises a reflective coating and said second covering comprises a coating that is configured to be substantially transparent when an ambient temperature is above a temperature threshold and to be substantially opaque when the ambient temperature is below the temperature threshold.
15. A wind turbine in accordance with any preceding clause, wherein said second covering comprises at least one layer of at least one of a thermotropic material and a thermochromic material.
16. A method of assembling a wind turbine, said method comprising:
   coupling a nacelle to a tower, the nacelle including a shell having an exterior surface and an interior surface, the interior surface defining an inner cavity; and,
   positioning at least one insulative covering adjacent to the exterior surface of the shell, the at least one insulative covering configured to reduce a fluctuation of a temperature within the inner cavity.
17. A method in accordance with any preceding clause, wherein said positioning at least one insulative covering adjacent to the exterior surface of the shell comprises positioning a reflective coating adjacent to the exterior surface.
18. A method in accordance with any preceding clause, wherein said positioning at least one insulative covering adjacent to the exterior surface of the shell comprises positioning a coating adjacent to the exterior surface, wherein the coating is configured to change in color based on an ambient temperature.
19. A method in accordance with any preceding clause, wherein said positioning at least one insulative covering adjacent to the exterior surface of the shell comprises:
   positioning a first covering adjacent to the exterior surface of the shell; and,
   positioning a second covering adjacent to the first covering.
20. A method in accordance with any preceding clause, wherein said positioning at least one insulative covering adjacent to the exterior surface of the shell comprises:
   positioning a first covering adjacent to the exterior surface of the shell, wherein the first covering comprises a reflective material; and,
   positioning a second covering adjacent to the first covering, wherein the second covering is substantially transparent when an ambient temperature is above a temperature threshold and is substantially opaque when the ambient temperature is below the temperature threshold.

## Claims

1. A nacelle (106) for a wind turbine (100), said nacelle comprising:
a shell (200) having an exterior surface (204) and an interior surface (206), said interior surface defining an inner cavity (202); and,
at least one insulative covering (302) adjacent to said exterior surface, said insulative covering configured to reduce a fluctuation of a temperature within said inner cavity.

2. A nacelle (106) in accordance with claim 1, wherein said insulative covering (302) comprises a reflective coating.

3. A nacelle (106) in accordance with any preceding claim, wherein said insulative covering (302) comprises a coating configured to change colors based on an ambient temperature.

4. A nacelle (106) in accordance with any preceding claim, wherein said insulative covering (302) comprises a plurality of insulative coverings.

5. A nacelle (106) in accordance with any preceding claim, wherein said plurality of insulative coverings (302) comprises a first covering adjacent to said exterior surface (204) and a second covering adjacent to said first covering.

6. A nacelle (106) in accordance with any preceding claim, wherein said first covering comprises a reflective coating and said second covering comprises a coating that is configured to be substantially transparent when an ambient temperature is above a temperature threshold and to be substantially opaque when the ambient temperature is below the temperature threshold.

7. A nacelle (106) in accordance with any preceding claim, wherein said second covering comprises at least one layer of at least one of a thermotropic material and a thermochromic material.

8. A wind turbine (100), comprising:
a tower (102); and,
a nacelle (106) coupled to said tower, said nacelle comprising:
a shell (200) having an exterior surface (204) and an interior surface (206), said interior surface defining an inner cavity (202); and,
at least one insulative covering (302) adjacent to said exterior surface, said insulative covering configured to reduce a fluctuation of a temperature within said inner cavity.

9. A wind turbine (100) in accordance with claim 8, wherein said insulative covering (302) comprises a reflective coating.

10. A wind turbine (100) in accordance with claim 8 or claim 9, wherein said at least one insulative covering (302) comprises a coating configured to change colors based on an ambient temperature.
